# EUROPEAN PATENT APPLICATION

(11) **EP 3 889 113 A1**
(43) Date of publication of application: **06.10.2021**
(21) Application number: 21164954.6
(22) Date of filing: 25.03.2021
(51) Int. Cl.: C01G 53/00, H01M 4/131, H01M 4/525

(54) **CATHODE MATERIAL AND PROCESS**

(30) Priority: 27.03.2020 GB 202004491
(71) Applicant: Johnson Matthey Public Limited Company, London EC4A 4AB (GB)
(72) Inventor: CLARK, Joanna Helen, Reading, Berkshire RG4 9NH (GB); DIAMOND, Andrew, Billingham, Cleveland TS23 1LB (GB); HAMMER, Eva-Maria, Reading, Berkshire RG4 9NH (GB); WALE, Olivia Rose, Reading, Berkshire RG4 9NH (GB)
(74) Representative: Lenden, Philip

(57) **Abstract**

The present invention relates to a particulate lithium nickel oxide material comprising particles having formula:
LiₐNiₓCo_{y}Mg_{z}AlₚO_{2+b}
wherein
0.95 ≤ a ≤ 1.05
0.90 ≤ x ≤ 0.95
0.040 ≤ y ≤ 0.050
0.030 ≤ z ≤ 0.045
0.0055 ≤ p ≤ 0.0075
-0.1 ≤ b ≤ 0.1.
Further aspects of the invention include a cathode comprising the particulate lithium nickel oxide material, and a lithium secondary cell or battery comprising such a cathode.

## Description

### Field of the Invention

The present invention relates to improved particulate lithium nickel oxide materials which are useful as cathode materials in lithium secondary batteries. The present invention also provides processes for preparing such lithium nickel oxide materials, and electrodes and cells comprising the materials.

### Background of the Invention

Lithium transition metal oxide materials having the formula LiMO₂, where M typically includes one or more transition metals, find utility as cathode materials in lithium ion batteries. Examples include LiNiO₂ and LiCoO₂.

US 6921609 B2 describes a composition suitable for use as a cathode material of a lithium battery which includes a core composition having an empirical formula LiₓM'_{z}Ni_{1-y}M"_{y}O₂ and a coating on the core which has a greater ratio of Co to Ni than the core.

WO 2013/025328 A1 describes a particle including a plurality of crystallites including a first composition having a layered α-NaFeO₂-type structure. The particles include a grain boundary between adjacent crystallites, and the concentration of cobalt in the grain boundaries is greater than the concentration of cobalt in the crystallites. Cobalt enrichment is achieved by treatment of the particles with a solution of LiNO₃ and Co(NOa)₂, followed by spray drying and calcining.

With demand increasing for lithium-ion batteries in high-end applications such as electric vehicles (EVs), it is imperative to use cathode materials which provide not only acceptable specific capacity but also excellent retention of that capacity over a large number of charging cycles, so that the range of the vehicle after each charge over its lifetime is as consistent as possible. Capacity retention is also commonly referred to simply as the "cyclability" of the battery.

There therefore remains a need for improved lithium transition metal oxide materials and processes for their manufacture. In particular, there remains a need for improvements in the capacity retention of lithium transition metal oxide materials when used as cathode materials in lithium secondary batteries.

### Summary of the Invention

In a first preferred aspect the present invention provides a particulate lithium nickel oxide material comprising particles having Formula I

LiₐNiₓCo_{y}Mg_{z}AlₚO_{2+b} Formula I

in which:
0.95 ≤ a ≤ 1.05
0.90 ≤ x < 0.95
0.040 ≤ y ≤ 0.050
0.030 ≤ z ≤ 0.045
0.0055 ≤ p ≤ 0.0075 and
-0.1 ≤ b ≤ 0.1.

The present inventors have found that materials according to the present invention provide excellent capacity retention with a very low cobalt content. Reducing cobalt content is highly desirable in the field for cost, environmental and ethical reasons.

Typically, the particulate lithium nickel oxide material is surface modified.

The present invention also provides a cathode material for a lithium secondary battery comprising the particulate lithium nickel oxide material according to the first aspect, and a cathode comprising the particulate lithium nickel oxide material according to the first aspect. The present invention also provides a lithium secondary cell or battery (e.g. a secondary lithium ion battery) comprising the cathode. The battery typically further comprises an anode and an electrolyte.

### Detailed Description

Preferred and/or optional features of the invention will now be set out. Any aspect of the invention may be combined with any other aspect of the invention unless the context demands otherwise. Any of the preferred and/or optional features of any aspect may be combined, either singly or in combination, with any aspect of the invention unless the context demands otherwise. It is intended that upper and lower limits of ranges are independently combinable, and that the various ranges and values given for a, b, x, y, z, p and q are combinable with each other and with the other features recited herein.

The particulate lithium nickel oxide material has a composition according to Formula I defined above. The compositions recited herein may be determined by Inductively Coupled Plasma (ICP) analysis as described in the Examples section below. It may be preferred that the compositions recited herein are ICP compositions. Similarly, the wt% content of elements in the particulate lithium nickel oxide materials may be determined using ICP analysis. The wt% values recited herein are determined by ICP and are with respect to the total weight of the particle analysed (except wt% lithium carbonate which is defined separately below).

In Formula I, 0.95 ≤ a < 1.05. It may be particularly preferred that 1.00 ≤ a ≤ 1.05.

In Formula I, 0.90 ≤ x < 95. It may be particularly preferred that 0.91 ≤ x ≤ 0.94.

In Formula I, 0.040 ≤ y ≤ 0.050. It may be particularly preferred that 0.043 ≤ y ≤ 0.047.

In Formula I, 0.030 ≤ z ≤ 0.045. It may be particularly preferred that 0.035 ≤ z ≤ 0.040.

In Formula I, 0.0055 ≤ p ≤ 0.0075. It may be particularly preferred that 0.0058 ≤ p ≤ 0.0065.

In Formula I, -0.1 ≤ b ≤ 0.1. It may be preferred that -0.05:5 b ≤ 0.05. In some embodiments, b is 0 or about 0. In some embodiments, b is 0.

In some embodiments:
1.00 ≤ a ≤ 1.05
0.91 ≤ x ≤ 0.94
0.043 ≤ y ≤ 0.047
0.035 ≤ z ≤ 0.040
0.0058 ≤ p ≤ 0.0065; and
-0.05 ≤ b ≤ 0.05 or b = 0.

In some embodiments, the particulate lithium nickel oxide material is a crystalline (or substantially crystalline) material. It may have the α-NaFeO₂-type structure. It may be a polycrystalline material, meaning that each particle of lithium nickel oxide material is made up of multiple crystallites (also known as crystal grains or primary particles) which are agglomerated together. The crystal grains are typically separated by grain boundaries. Where the particulate lithium nickel oxide is polycrystalline, it will be understood that the particles of lithium nickel oxide comprising multiple crystals are secondary particles.

In some embodiments, the particulate lithium nickel oxide material of Formula I comprises an enriched surface, i.e. comprises a core material which has been surface modified (subjected to a surface modification process) to form an enriched surface layer. In some embodiments the surface modification results from contacting the core material with one or more further metal-containing compounds, and then optionally carrying out calcination of the material. The compounds may be in solution, and in such context herein the term "compound" refers to the corresponding dissolved species. For clarity, the discussions of the composition according to Formula I herein when in the context of surface-modified particles relate to the overall particle, i.e. the particle including the enriched surface layer.

Herein, the terms "surface modified", "enriched surface" and "enriched surface layer" refer to a particulate material which comprises a core material which has undergone a surface modification or surface enrichment process to increase the concentration of one or more metals, e.g. aluminium and/or cobalt at or near to the surface of the particles. The term "enriched surface layer" therefore refers to a layer of material at or near to the surface of the particles which contains a greater concentration of one or more metals, e.g. aluminium and/or cobalt, than the remaining material of the particle, i.e. the core of the particle.

In some embodiments, the particle comprises a greater concentration of Al in the enriched surface layer than in the core. In some embodiments, all or substantially all of the Al in the particle is in the enriched surface layer. In some embodiments, the core does not contain Al or contains substantially no Al, for example less than 0.01 wt% Al based on the total particle weight.

In some embodiments, all or substantially all of the Co in the particle is in the core. In some embodiments, the enriched surface layer does not contain Co or contains substantially no Co, for example less than 0.01 wt% Co based on the total particle weight.

It may be preferred that a portion of the lithium in the particle is in the surface enriched layer.

As used herein, the content of a given element in the surface enriched layer is calculated by determining the wt% of that element in the particulate lithium nickel oxide material prior to surface enrichment (sometimes referred to herein as the first calcined material or the core material) by ICP to give value A, determining the wt% of that element in the final particulate lithium nickel oxide material after surface enrichment (and optional further calcination) by ICP to give value B, and subtracting value A from value B. Similarly, the content of a given element in the core may be determined by determining the wt% of that element in the particulate lithium nickel oxide material prior to surface enrichment (sometimes referred to herein as the first calcined material or the core material) by ICP.

As the skilled person will understand, elements may migrate between the core and the surface layer during preparation, storage or use of the material. Herein, where an element is stated to be present in (or absent from, or present in certain quantities in) the core, this is to be understood to refer to that element being intentionally added to, (or excluded from, or added in a particular quantity to) the core, and is not intended to exclude from the scope of protection materials where the distribution of elements is altered by migration during preparation, storage or use. Similarly, where an element is stated to be present in (or absent from, or present in certain quantities in) the surface enriched layer, this is to be understood to refer to that element being intentionally added to, (or excluded from, or added in a particular quantity to) the surface enriched layer, and is not intended to exclude from the scope of protection materials where the distribution of elements is altered by migration during preparation, storage or use. For example, where all or substantially all of the Al in the particle is in the enriched surface layer, this means that all or substantially all of the Al is added in the surface enrichment step, but does not preclude materials where some of the Al added in the surface enrichment step has migrated into the core.

The inventors have found that including a surface modification or enriched surface layer which contains Al (e.g. by performing a surface modification step on the core material) provides a surface-modified material with improved properties, such as improved capacity retention.

In some embodiments the surface modification comprises immersion in a solution comprising aluminium species (for example in the form of an aluminium-containing compound), followed by drying of the surface-modified material and optionally calcination. The solution may additionally contain cobalt species (for example in the form of a cobalt-containing compound) and/or lithium species (for example in the form of a lithium-containing compound). In some embodiments, the solution is heated, for example to a temperature of at least 50 °C, for example at least 55 °C or at least 60 °C. In some embodiments, the surface-modified material is spray-dried after being contacted with the solution. In some embodiments, the surface-modified material is calcined after spray drying. The lithium, aluminium and cobalt-containing compounds may independently be the respective metal nitrates.

The particulate lithium nickel oxide material typically has a D50 particle size of at least 4 µm, e.g. at least 5 µm, at least 5.5 µm, at least 6.0 µm or at least 6.5 µm. The particles of lithium nickel oxide (e.g. secondary particles) typically have a D50 particle size of 20 µm or less, e.g. 15 µm or less or 12 µm or less. In some embodiments, the D50 particle size is from about 5 µm to about 20 µm, for example about 5 µm to about 19 µm, for example about 5 µm to about 18 µm, for example about 5 µm to about 17 µm, for example about 5 µm to about 16 µm, for example about 5 µm to about 15 µm, for example about 5 µm to about 12 µm, for example about 5.5 µm to about 12 µm, for example about 6 µm to about 12 µm, for example about 6.5 µm to about 12 µm, for example about 7 µm to about 12 µm, for example about 7.5 µm to about 12 µm. Unless otherwise specified herein, the D50 particle size refers to Dv50 (volume median diameter) and may be determined by using the method set out in ASTM B822 of 2017 under the Mie scattering approximation, for example using a Malvern Mastersizer 3000.

In some embodiments, the D10 particle size of the material is from about 0.1 µm to about 10 µm, for example about 1 µm to about 10 µm, about 2 µm to about 8 µm, or from about 5 µm to about 7 µm. Unless otherwise specified herein, the D10 particle size refers to Dv10 (10% intercept in the cumulative volume distribution) and may be determined by using the method set out in ASTM B822 of 2017 under the Mie scattering approximation, for example using a Malvern Mastersizer 3000.

In some embodiments, the D90 particle size of the material is from about 10 µm to about 40 µm, for example from about 12 µm to about 35 µm, about 12 µm to about 30 µm, about 15 µm to about 25 µm or from about 16 µm to about 20 µm. Unless otherwise specified herein, the D90 particle size refers to Dv90 (90% intercept in the cumulative volume distribution) and may be determined by using the method set out in ASTM B822 of 2017 under the Mie scattering approximation, for example using a Malvern Mastersizer 3000.

In some embodiments, the tapped density of the particulate lithium nickel oxide is from about 1.9 g/cm³ to about 2.8 g/cm³ , e.g. about 1.9 g/cm³ to about 2.4 g/cm³.

The tapped density of the material can suitably be measured by loading a graduated cylinder with 25 mL of powder. The mass of the powder is recorded. The loaded cylinder is transferred to a Copley Tapped Density Tester JV Series. The material is tapped 2000 times and the volume re-measured. The re-measured volume divided by the mass of material is the recorded tap density.

The particulate lithium nickel oxide typically comprises less than 1 wt% of surface Li₂CO₃. It may comprise less than 0.8 wt% of surface Li₂CO₃, e.g. less than 0.6 wt%, or less than 0.5 wt%. It may have 0 wt% surface Li₂CO₃, but in some embodiments there may be at least 0.01 wt%, 0.02 wt% or 0.03 wt% of surface Li₂CO₃.

The amount of surface Li₂COa may be determined by titration with HCI using bromophenol blue indicator. Typically, a first titration step with HCI and phenolphthalein indicator is carried out before titration with bromophenol blue indicator to remove any lithium hydroxide. The titration protocol may include the following steps:
- Extract surface lithium carbonate from sample of particulate lithium nickel oxide material by agitating in deionised water for 5 minutes to provide an extractate solution, and separate extractate solution from residual solid;
- Add phenolphthalein indictor to the extractate solution, and titrate using HCI solution until extractate solution becomes clear (indicating the removal of any LiOH);
- Add bromophenol blue indictor to the extractate solution, and titrate using HCI solution until extractate solution turns yellow; (the amount of lithium carbonate in the extractate solution can be calculated from this titration step); and
- Calculate wt% of surface lithium carbonate in the sample of particulate lithium nickel oxide material, assuming 100% extraction of surface lithium carbonate into the extractate solution.

The particulate lithium nickel oxide of the invention is characterised by an improved capacity retention for cells which incorporate the material as a cathode, in particular a high retention of capacity after 50 cycles. When determined at a temperature of 23 °C in a half cell coin cell vs lithium, under a charge/discharge rate of 1C and voltage window of 3.0-4.3V, with an electrode loading of 9.0 mg/cm² and an electrode density of 3.0 g/cm³, it has been found that materials according to the invention may provide a capacity retention of greater than 94% after 50 cycles, and in some cases as high as around 98%. The % capacity retention after 50 cycles is defined as the capacity of the cell after the 50^{th} cycle as a percentage of the initial capacity of the cell after its first charge. For clarity, one cycle includes a complete charge and discharge of the cell. For example, 90% capacity retention means that after the 50^{th} cycle the capacity of the cell is 90% of the initial capacity.

The material may have a capacity retention (after 50 cycles in a half cell coin cell vs Li, at an electrode loading of 9.0 mg/cm² and an electrode density of 3.0 g/cm³, tested at 23 °C and a 1C charge/discharge rate and voltage window of 3.0-4.3V) of at least 95%. In some embodiments, the capacity retention is at least 96% or at least 97%.

Materials of the invention are also characterised by a high specific capacity. It has been found that materials according to the invention when tested in a cell at 23 °C, a 1C discharge rate and a voltage window of 3.0-4.3V, with an electrode loading of 9.0 mg/cm² and an electrode density of 3.0 g/cm³ in a half call coin cell vs Li metal, provide a specific capacity of at least 160 mAh/g, in some cases as high as 190 mAh/g. This high specific capacity in combination with the high capacity retention on cycling provides a cell or battery of improved performance with an extended usable lifetime which is useful in high performance applications such as in electric vehicles.

The material may have a specific capacity when tested in a cell at 23 °C, a 1C discharge rate and a voltage window of 3.0-4.3V, with an electrode loading of 9.0 mg/cm² and an electrode density of 3.0 g/cm³ in a half call coin cell vs Li metal of at least 190 mAh/g.

The lithium nickel oxide materials of the present invention are typically made by calcining a mixture of lithium compound and a mixed metal hydroxide, for example in CO₂-free air. CO₂-free air can be prepared using a CO₂ scrubber. Where the materials include an enriched surface layer, this is typically provided by performing a surface modification step on a core lithium nickel oxide material. The particles may be milled to achieve the desired size. The mixed metal hydroxide may be prepared by co-precipitation from a solution of metal salts by methods known in the art.

Typically, the electrode of the present invention will have an electrode density of at least 2.5 g/cm³, at least 2.8 g/cm³ or at least 3 g/cm³. It may have an electrode density of 4.5 g/cm³ or less, or 4 g/cm³ or less. The electrode density is the electrode density (mass/volume) of the electrode, not including the current collector the electrode is formed on. It therefore includes contributions from the active material, any additives, any additional carbon material, and any remaining binder.

The present invention will now be described with reference to the following examples, which are provided to assist with understanding the present invention, and are not intended to limit its scope.

### Examples

### Comparative Example 1 - Preparation of base materials

### Comparative Example 1A - Base 1 (Li_{1.030}Ni_{0.953}Co_{0.030}Mg_{0.010}O₂)

100 g Ni_{0.960}Co_{0.031}Mg_{0.099}(OH)₂ and 26.36 g LiOH were dry mixed in a poly-propylene bottle for 30 mins. The LiOH was pre-dried at 200 °C under vacuum for 24 hours and kept dry in a purged glovebox filled with dry N₂.

The powder mixture was loaded into 99%+ alumina crucibles and calcined under an artificial CO₂-free air mix which was 80:20 N₂:O₂. Calcination was performed as follows: to 450 °C (5 °C/min) with 2 hours hold, ramp to 700 °C (2 °C/min) with a 6 hour hold and cooled naturally to 130 °C. The artificial air mix was flowing over the powder bed throughout the calcination and cooling. The title compound was thereby obtained.

The samples were then removed from the furnace at 130 °C and transferred to a high-alumina lined mill pot and milled on a rolling bed mill until D₅₀ was between 12.0 and 12.5 µm.

D₅₀ was measured according to ASTM B822 of 2017 using a Malvern Mastersizer 3000 under the Mie scattering approximation and was found to be 9.5 µm. The chemical formula of the material was determined by ICP analysis to be Li_{1.030}Ni_{0.953}Co_{0.030}Mg_{0.010}O₂.

### Comparative Example 1B - Base 2 (Li_{1.019}Ni_{0.949}Co_{0.031}Mg_{0.020}O₂)

The procedure according to Comparative Example 1A was repeated except that 26.21 g of LiOH were dry mixed with 100 g Ni_{0.948}Co_{0.031}Mg_{0.021}(OH)₂. The title compound was thereby obtained. D₅₀ was found to be 10.2 µm. The chemical formula of the material was determined by ICP analysis to be Li_{1.019}Ni_{0.949}Co_{0.031}Mg_{0.000}O₂.

### Comparative Example 1C- Base 3 (Li_{1.027}Ni_{0.923}Co_{0.049}Mg_{0.029}O₂)

The procedure according to Comparative Example 1A was repeated except that 24.8 g of LiOH were dry mixed with 100 g Ni_{0.917}Co_{0.050}Mg_{0.033}(OH)₂. The title compound was thereby obtained. D₅₀ was found to be 9.65 µm. The chemical formula of the material was determined by ICP analysis to be Li_{1.027}Ni_{0.923}Co_{0.049}Mg_{0.029}O₂.

### Comparative Example 10 - Base 4 (Li_{1.007}Ni_{0.923}Co_{0.049}Mg_{0.038}O₂)

The procedure according to Comparative Example 1A was repeated except that 25.92 g of LiOH were dry mixed with 100 g Ni_{0.915}Co_{0.049}Mg_{0.036}(OH)₂. The title compound was thereby obtained. D₅₀ was found to be 12.2 µm. The chemical formula of the material was determined by ICP analysis to be Li_{1.007}Ni_{0.923}CO_{0.049}Mg_{0.038}O₂.

### Comparative Example 1E- Base 5 (Li_{0.998}Ni_{0.917}Co_{0.049}Mg_{0.052}O₂)

The procedure according to Comparative Example 1A was repeated except that 25.75 g of LiOH were dry mixed with 100 g Ni_{0.903}Co_{0.048}Mg₄.₀₄₉(OH)₂. The title compound was thereby obtained. The chemical formula of the material was determined by ICP analysis to be Li_{0.998}Ni_{0.917}Co_{0.049}Mg_{0.052}O₂.

### Comparative Example 1F - Base 6 (Li_{1.024}Ni_{0.926}Co_{0.045}Mg_{0.037}O₂)

The procedure according to Comparative Example 1A was repeated except that 25.94 g of LiOH were dry mixed with 100 g Ni_{0.918}Co_{0.045}Mg_{0.037}(OH)₂. The title compound was thereby obtained. D₅₀ was found to be 9.0 µm. The chemical formula of the material was determined by ICP analysis to be Li_{1.024}Ni_{0.926}Co_{0.045}Mg_{0.037}O₂.

### Comparative Example 1G- Base 7 (Li_{1.003}Ni_{0.956}Co_{0.030}Mg_{0.020}O₂)

The procedure according to Comparative Example 1A was repeated except that 26.20 g of LiOH were dry mixed with 100 g Ni_{0.952}Co_{0.029}Mg_{0.019}(OH)₂. The title compound was thereby obtained. D₅₀ was found to be 9.6 µm. The chemical formula of the material was determined by ICP analysis to be Li_{1.003}Ni_{0.956}Co_{0.030}Mg_{0.020}O₂.

### Comparative Example 1H - Base 8 (Li_{1.009}Ni_{0.957}Co_{0.030}Mg_{0.015}O₂)

The procedure according to Comparative Example 1A was repeated except that 26.29 g of LiOH were dry mixed with 100 g Ni_{0.957}Co_{0.029}Mg_{0.014}(OH)₂. The title compound was thereby obtained. D₅₀ was found to be 9.3 µm. The chemical formula of the material was determined by ICP analysis to be Li_{1.009}Ni_{0.957}Co_{0.030}Mg_{0.015}O₂.

### Comparative Example 1J - Base 9 (Liₗ. ₀₀₅Ni_{O}. ₉₄₄ CO_{O}. ₀₂₉Mg_{O}. ₀₃₈0₂)

The procedure according to Comparative Example 1A was repeated except that 25.96 g of LiOH were dry mixed with 100 g Ni_{0.935}Co_{0.029}Mg_{0.037}(OH)₂. The title compound was thereby obtained. D₅₀ was found to be 10.7 µm. The chemical formula of the material was determined by ICP analysis to be Li_{1.005}Ni_{0.944}CO_{0.029}Mg_{0.038}O₂.

### Comparative Example 1K - Base 10 (Li_{0.996}Ni_{0.914}Co_{0.053}Mg_{0.051}O₂)

The procedure according to Comparative Example 1A was repeated except that 25.75 g of LiOH were dry mixed with 100 g Ni_{0.900}Co_{0.053}Mg_{0.048}(OH)₂. The title compound was thereby obtained. D₅₀ was found to be 9.49 µm. The chemical formula of the material was determined by ICP analysis to be Li_{0.996}Ni_{0.914}Co_{0.053}Mg_{0.051}O₂.

Bases 12 to 20, listed in Table 3 below, were made by an analogous process to Bases 1 to 10.

### Example 1 - Preparation of surface-modified materials

### Example 1A - Compound 1 (Li_{1.018}Ni_{0.930}Co_{0.049}Mg_{0.010}Al_{0.006}O₂)

The product of Comparative Example 1A was sieved through a 53 µm sieve and transferred to a N₂-purged glovebox. An aqueous solution containing 5.91 g Co(NO₃)₂.6H₂O, 0.47 g LiNO₃ and 2.44 g Al(NO₃)₃.9H₂O in 100 mL water was heated to between 60 and 65 °C. 100 g of the sieved powder was added rapidly while stirring vigorously. The slurry was stirred at a temperature between 60 and 65 °C until the supernatant was colourless. The slurry was then spray-dried.

After spray-drying powders were loaded into 99%+ alumina crucibles and calcined under an artificial CO₂-free air mix which was 80:20 N₂:O₂. Calcination was performed as follows: ramp to 130 °C (5 °C/min) with 5.5 hours hold, ramp to 450 °C (5 °C/min) with 1 hour hold, ramp to 700 °C (2 °C/min) with a 2 hours hold and cooled naturally to 130°C. The artificial air mix was flowing over the powder bed through the calcination and cooling. The title compound was thereby obtained.

The samples were then removed from the furnace at 130 °C and transferred to a purged N₂-filled glove-box.

The sample was milled in a high-alumina lined mill pot on a rolling bed mill. The target end point of the milling was when D₅₀ was between 10 and 11 µm; D₅₀ was measured after milling and found to be 9.5 µm. The sample was passed through a 53 µm sieve and stored in a purged N₂ filledglove-box. The water content of the material was 0.18 wt%. The chemical formula of the material was determined by ICP analysis to be Li_{1.018}Ni_{0.930}Co_{0.049}Mg_{0.010}Al_{0.006}O₂.

### Example 1B - Compound 2 (Li_{1.002}Ni_{0.927}Co_{0.053}Mg_{0.020}Al_{0.0065}O₂)

The product of Comparative Example 1B was subjected to the procedure set out under Example 1A, except that the aqueous solution contained 5.90 g Co(NO₃)₂.6H₂O, 0.47 g LiNO₃ and 2.43 g Al(NO₃)₃.9H₂O in 100 mL water. The title compound was thereby obtained. D₅₀ was found to be 8.5 µm. The water content of the material was 0.28 wt%. The chemical formula of the material was determined by ICP analysis to be Li_{1.002}Ni_{0.927}Co_{0.053}Mg_{0.020}Al_{0.0065}O₂.

### Example 1C - Compound 3 (Li_{0.995}Ni_{0.909}Co_{0.068}Mg_{0.027}Al_{0.0065}O₂)

The product of Comparative Example 1C was subjected to the procedure set out under Example 1A, except that the aqueous solution contained 5.89 g Co(NO₃)₂.6H₂O, 0.46 g LiNO₃ and 2.43 g Al(NO₃)₃.9H₂O in 100 mL water. The title compound was thereby obtained. D₅₀ was found to be 7.61 µm. The water content of the material was 0.2 wt%. The chemical formula of the material was determined by ICP analysis to be Li_{0.995}Ni_{0.909}Co_{0.068}Mg_{0.027}Al_{0.0065}O₂.

### Example 1D - Compound 4 (Li_{0.985}Ni_{0.913}Co_{0.061}Mg_{0.037}Al_{0.0069}O₂)

The product of Comparative Example 1D was subjected to the procedure set out under Example 1A, except that the aqueous solution contained 3.94 g Co(NO₃)₂.6H₂O and 2.43 g Al(NO₃)₃.9H₂O in 100 mL water, but did not contain any LiNO₃. The title compound was thereby obtained. D₅₀ was found to be 11.7 µm. The water content of the material was 0.26 wt%. The chemical formula of the material was determined by ICP analysis to be Li_{0.985}Ni_{0.913}Co_{0.061}Mg_{0.037}Al_{0.009}O₂.

### Example 1E- Compound 5 (Li_{0.980}Ni_{0.905}Co_{0.061}Mg_{0.051}Al_{0.0065}O₂)

The product of Comparative Example 1E was subjected to the procedure set out under Example 1A, except that the aqueous solution contained 3.93 g Co(NO₃)₂.6H₂O and 2.42 g Al(NO₃)₃.9H₂O in 100 mL water, but did not contain any LiNO₃. The title compound was thereby obtained. D₅₀ was found to be 10.7 µm. The water content of the material was 0.09 wt%. The chemical formula of the material was determined by ICP analysis to be Li_{0.980}Ni_{0.905}Co_{0.061}Mg_{0.051}Al_{0.0065}O₂.

### Example 1F - Compound 6 (Li_{1.003}Ni_{0.923}Co_{0.045}Mg_{0.038}Al_{0.0062}O₂)

The product of Comparative Example 1F was subjected to the procedure set out under Example 1A, except that the aqueous solution contained 2.43 g Al(NO₃)₃.9H₂O in 100 mL water, but did not contain any Co(NO₃)₂.6H₂O or LiNO₃. The title compound was thereby obtained. D₅₀ was found to be 7.5 µm. The water content of the material was 0.18 wt%. The chemical formula of the material was determined by ICP analysis to be Li_{1.003}Ni_{0.923}Co_{0.045}Mg_{0.038}Al_{0.0062}O₂.

### Example 1G - Compound 7 (Li_{0.997}Ni_{0.952}Co_{0.029}Mg_{0.019}Al_{0.0065}O₂)

The product of Comparative Example 1G was subjected to the procedure set out under Example 1A, except that the aqueous solution contained 2.44 g Al(NO₃)₃.9H₂O in 100 mL water, but did not contain any Co(NO₃)₂.6H₂O or LiNO₃. The title compound was thereby obtained. D₅₀ was found to be 7.9 µm. The water content of the material was 0.29 wt%. The chemical formula of the material was determined by ICP analysis to be Li_{0.997}Ni_{0.952}Co_{0.029}Mg_{0.019}Al_{0.0065}O₂.

### Example 1H- Compound 8 (Li_{1.002}Ni_{0.919}Co_{0.064}Mg_{0.014}Al_{0.0062}O₂)

The product of Comparative Example 1H was subjected to the procedure set out under Example 1A, except that the aqueous solution contained 11.82 g Co(NO₃)₂.6H₂O, 1.88 g LiNO₃ and 2.44 g Al(NO₃)₃.9H₂O in 100 mL water. The title compound was thereby obtained. D₅₀ was found to be 8.2 µm. The water content of the material was 0.29 wt%. The chemical formula of the material was determined by ICP analysis to be Li_{1.002}Ni_{0.919}Co_{0.064}Mg_{0.014}Al_{0.0062}O₂.

### Example 1J- Compound 9 (Li_{0.980}Ni_{0.909}Co_{0.066}Mg_{0.037}Al_{0.0066}O₂)

The product of Comparative Example 1J was subjected to the procedure set out under Example 1A, except that the aqueous solution contained 11.77 g Co(NO₃)₂.6H₂O, 1.87 g LiNO₃ and 2.44 g Al(NO₃)₃.9H₂O in 100 mL water. The title compound was thereby obtained. D₅₀ was found to be 10.0 µm. The water content of the material was 0.08 wt%. The chemical formula of the material was determined by ICP analysis to be Li_{0.980}Ni_{0.909}Co_{0.066}Mg_{0.037}Al_{0.0066}O₂.

### Example 1K - Compound 10 (Li_{0.987}Ni_{0.900}Co_{0.064}Mg_{0.051}Al_{0.0065}O₂)

The product of Comparative Example 1K was subjected to the procedure set out under Example 1A, except that the aqueous solution contained 3.93 g Co(NO₃)₂.6H₂O and 2.42 g Al(NO₃)₃.9H₂O in 100 mL water, but did not contain any LiNO₃. The title compound was thereby obtained. D₅₀ was found to be 9.4 µm. The water content of the material was 0.17 wt%. The chemical formula of the material was determined by ICP analysis to be Li_{0.987}Ni_{0.900}Co_{0.064}Mg_{0.051}Al_{0.0065}O₂.

### Example 1L- Compound 11 (Li_{0.984}Ni_{0.877}Co_{0.115}Mg_{0.010}Al_{0.0066}O₂)

100 g Ni_{0.905}Co_{0.084}Mg_{0.010}(OH)₂ and 26.33 g LiOH were dry mixed in a poly-propylene bottle for 1 hour. The LiOH was pre-dried at 200 °C under vacuum for 24 hours and kept dry in a glovebox purged with dry N₂.

The powder mixture was loaded into 99%+ alumina crucibles and calcined under an artificial CO₂ free air mix which was 80:20 N₂:O₂. Calcination was performed as follows: to 450 °C (5 °C/min) with 2 hours hold, ramp to 700 °C (2 °C/min) with a 6 hour hold and cooled naturally to 130 °C. The artificial air mix was flowing over the powder bed throughout the calcination and cooling.

The samples were then removed from the furnace at 130 °C and transferred to a purged N₂ filled glove-box. The sample was transferred to a high-alumina lined mill pot and milled on a rolling bed mill until D₅₀ was between 12.0 - 12.5 µm.

After milling, the product was sieved through a 53 µm sieve and transferred to a purged N₂ filled glovebox. An aqueous solution containing 11.83 g Co(NO₃)₂.6H₂O, 1.88 g LiNO₃ and 2.44 g Al(NO₃)₃.9H₂O in 100 mL water was heated to between 60 and 65 °C. 100 g of the sieved powder was added rapidly while stirring vigorously. The slurry was stirred at a temperature between 60 and 65 °C until the supernatant was colourless. The slurry was then spray-dried.

After spray-drying powders were loaded into 99%+ alumina crucibles and calcined under an artificial CO₂ free air mix which was 80:20 N₂:O₂. Calcination was performed as follows: ramp to 130°C (5 °C/min) with 5.5 hours hold, ramp to 450°C (5 °C/min) with 1 hour hold, ramp to 700°C (2 °C/min) with a 2 hours hold and cooled naturally to 130°C. The artificial air mix was flowing over the powder bed through the calcination and cooling. The title compound was thereby obtained.

The samples were then removed from the furnace at 130 °C and transferred to a N₂ filled glove-box.

The sample was milled in a high-alumina lined mill pot on a rolling bed mill. The end point of the milling was when D50 was between 10 and 11 µm; D₅₀ was measured after milling and found to be 8.8 µm. The sample was passed through a 53 µm sieve and stored in a purged N₂ filled glove-box.

The water content of the material was 0.4 wt%. The chemical formula of the material was determined by ICP analysis to be Li_{0.984}Ni_{0.877}Co_{0.115}Mg_{0.010}Al_{0.0066}O₂.

Compounds 12 to 20, listed in Table 3 below, were made by an analogous process to Compounds 1 to 10, using the following bases:

**Table 1**

| ***Compound*** | ***Base*** |
|---|---|
| Compound 12 | Base 12 |
| Compound 13 | Base 13 |
| Compound 14 | Base 14 |
| Compound 15 | Base 15 |
| Compound 16 | Base 16 |
| Compound 17a | Base 17 |
| Compound 17b | Base 17 |
| Compound 18a | Base 18 |
| Compound 18b | Base 18 |
| Compound 19 | Base 19 |
| Compound 20 | Base 20 |

### Li₂CO₃ Content

Surface Li₂CO₃ content in samples was determined using a two-stage titration with phenolphthalein and bromophenol blue. For the titration, surface lithium carbonate was extracted from a sample of each material by agitating in deionised water for 5 minutes to provide an extractate solution, the extractate solution was separated from residual solid. Phenolphthalein indictor was added to the extractate solution, and the extracted solution was titrated using HCI solution until the extractate solution became clear (indicating the removal of any LiOH). Bromophenol blue indictor was added to the extractate solution, and the extracted solution titrated using HCI solution until the extractate solution turned yellow. The amount of lithium carbonate in the extractate solution was be calculated from this bromophenol titration step, the wt% of surface lithium carbonate in each sample was calculated assuming 100% extraction of surface lithium carbonate into the extractate solution.

The results for the materials tested were as set out in Table 2:

**Table 2**

| ***Material*** | ***Li₂CO₃ content (wt%)*** |
|---|---|
| Compound 1 | 0.28 |
| Compound 2 | 0.26 |
| Compound 3 | 0.16 |
| Compound 4 | 0.36 |
| Compound 5 | 0.41 |
| Compound 6 | 0.40 |
| Compound 7 | 0.53 |
| Compound 8 | 0.19 |
| Compound 9 | 0.15 |
| Compound 10 | 0.31 |
| Compound 11 | 0.19 |
| Compound 12 | 0.1 |
| Compound 13 | 0.89 |
| Compound 14 | 0.23 |
| Compound 15 | 0.16 |
| Compound 16 | 0.18 |
| Compound 17a | 0.19 |
| Compound 17b | 1.02 |
| Compound 18a | 0.19 |
| Compound 18b | 0.918 |
| Compound 19 | 0.11 |
| Compound 20 | 0.61 |

### Compositional analysis

The total magnesium and cobalt contents (weight % based on the total particle weight) in the Comparative and Inventive materials was determined by ICP and is given in Table 3 below.

The surface cobalt content was calculated by subtracting the ICP wt% Co in the base material from the ICP wt% Co in the final material. The core cobalt content is taken as the ICP wt% Co in the base material.

### ICP (Inductively Coupled Plasma)

The elemental composition of the compounds was measured by ICP-OES. For that, 0.1 g of material are digested with aqua regia (3:1 ratio of hydrochloric acid and nitric acid) at ∼130°C and made up to 100 mL. The ICP-OES analysis was carried out on an Agilent 5110 using matrix matched calibration standards and yttrium as an internal standard. The lines and calibration standards used were instrument-recommended.

### Electrochemical Testing

Electrodes were made in a 94:3:3 active:carbon:binder formulation with an ink at 65 % solids. 0.6 g of SuperC65 carbon was mixed with 5.25 g of N-methyl pyrrolidone (NMP) on a Thinky® mixer. 18.80 g of active material was added and further mixed using the Thinky® mixer. Finally, 6.00 g of Solef® 5130 binder solution (10 wt% in NMP) was added and mixed in the Thinky mixer. The resulting ink was cast onto aluminium foils using a 125 µm fixed blade coater and dried at 120 °C for 60 minutes. Once dry, the electrode sheet was calendared in an MTI calendar to achieve a density of 3 g/cm³. Individual electrodes were cut and dried under vacuum overnight before transferring to an argon filled glovebox.
Coin cells were built using a lithium anode and 1M LiPF₆ in 1:1:1 EC (ethylene carbonate): EMC (ethyl methyl carbonate) : DMC (dimethyl carbonate) + 1 wt% VC (vinylene carbonate) electrolyte. Electrodes selected had a loading of 9.0 mg/cm² and a density of 3 g/cm³. Electrochemical measurements were taken from averages of three cells measured at 23 °C, and a voltage window of 3.0-4.3V.

Electrochemical characteristics evaluated include first cycle efficiency (FCE), 0.1 C specific capacity, 1.0 C specific capacity, capacity retention and DCIR growth using a 10s pulse.

Capacity retention and DCIR growth were determined based on performance after 50 cycles at 1C.

Table 3 below includes details of the materials tested.

**Table 3**

| **Material** | **Formula** | **Mg content (wt%)** | **Total Co content (wt%)** | **D₅₀ (µm)** | **Specific capacity at 1C (mAh/g)** | **Specific capacity at 0.1C (mAh/g)** | **CR (%)** | **FCE (%)** | **DCIR growth, 10 s (%)** | |
|---|---|---|---|---|---|---|---|---|---|---|
| Base 1 | Li_{1.030}Ni_{0.953}Co_{0.030}Mg_{0.010}O₂ | 0.2 | 1.8 | 9.5 | 194.6 | 213.9 | 80.9 | 87.3 | 29 | |
| Base 2 | Li_{1.019}Ni_{0.949}Co_{0.031}Mg_{0.020}O₂ | 0.5 | 1.8 | 10.2 | 190.2 | 208.1 | 85.8 | 85.8 | 34 | |
| Base 3 | Li_{1.027}Ni_{0.923}Co_{0.049}Mg_{0.029}O₂ | 0.7 | 2.9 | 9.65 | 185.0 | 203.1 | 93.5 | 87.2 | 34 | |
| Base 4 | Li_{1.007}Ni_{0.923}Co_{0.049}Mg_{0.038}O₂ | 0.9 | 2.9 | 12.2 | nm | nm | nm | nm | nm | |
| Base 5 | Li_{0.998}Ni_{0.917}Co_{0.049}Mg_{0.052}O₂ | 1.3 | 2.9 | 12.1 | nm | nm | nm | nm | nm | |
| Base 6 | Li_{1.024}Ni_{0.926}Co_{0.045}Mg_{0.037}O₂ | 0.9 | 2.7 | 9.0 | 180.6 | 197.9 | 96.4 | 85.2 | 32 | |
| Base 7 | Li_{1.003}Ni_{0.956}Co_{0.030}Mg_{0.020}O₂ | 0.5 | 1.8 | 9.6 | 193.4 | 211.5 | 84.8 | 87.3 | 32 | |
| Base 8 | Li_{1.009}Ni_{0.957}Co_{0.030}Mg_{0.015}O₂ | 0.4 | 1.8 | 9.3 | 196.3 | 218.1 | 80.7 | 89.2 | 38 | |
| Base 9 | Li_{1.005}Ni_{0.944}Co_{0.029}Mg_{0.038}O₂ | 0.9 | 1.7 | 10.7 | 182.7 | 198.2 | 91.0 | 84.1 | 30 | |
| Base 10 | Li_{0.996}Ni_{0.914}Co_{0.053}Mg_{0.051}O₂ | 1.3 | 3.2 | 9.49 | nm | nm | nm | nm | nm | |
| Base 12 | Li_{1.026}Ni_{0.930}Co_{0.049}Mg_{0.019}O₂ | 0.5 | 2.9 | 8.4 | 192.5 | 212.4 | 92.3 | 88.5 | 40 | |
| Base 13 | Li_{1.018}Ni_{0.911}Co_{0.058}Mg_{0.038}O₂ | 0.9 | 3.5 | 9.4 | 176.7 | 194.1 | 95.6 | 85.4 | 34 | |
| Base 14 | Li_{1.021}Ni_{0.930}Co_{0.048}Mg_{0.028}O₂ | 0.7 | 2.9 | 9.8 | 180.6 | 195.81 | 92.0 | 84.9 | 43 | |
| Base 15 | Li_{1.035}Ni_{0.921}Co_{0.048}Mg_{0.029}O₂ | 0.7 | 2.9 | 9.8 | 183.4 | 201.68 | 91.2 | 86.4 | 39 | |
| Base 16 | Li_{1.013}Ni_{0.902}Co_{0.081}Mg_{0.020}O₂ | 0.5 | 4.8 | 8.9 | 182.69 | 204.63 | 91.8 | 89.1 | 45 | |
| Base 17 | Li_{1.033}Ni_{0.904}Co_{0.079}Mg_{0.009}O₂ | 0.2 | 4.7 | 10.2 | 190.0 | 212.9 | 91.4 | 89.4 | 40 | |
| Base 18 | Li_{1.013}Ni_{0.900}Co_{0.075}Mg_{0.038}O₂ | 0.9 | 4.5 | 12 | 174.96 | 193.09 | 96.6 | 84.8 | 31 | |
| Base 19 | Li_{1.041}Ni_{0.925}Co_{0.048}Mg_{0.019}O₂ | 0.5 | 2.9 | 9.8 | 189.9 | 209.2 | 88.8 | 88.1 | 34 | |
| Base 20 | Li_{1.017}Ni_{0.907}Co_{0.068}Mg_{0.029}O₂ | 0.7 | 4.0 | 9.4 | 181.9 | 211.5 | 94.5 | 87.3 | 36 | |
| Compound 1 | Li_{1.018}Ni_{0.930}Co_{0.049}Mg_{0.010}Al_{0.006}O₂ | 0.2 | 1.1 | 2.9 | 8.5 | 198.5 | 216.5 | 87.4 | 88.3 | 38 |
| Compound 2 | Li_{1.002}Ni_{0.927}Co_{0.053}Mg_{0.020}Al_{0.0065}O₂ | 0.5 | 1.3 | 3.2 | 9.5 | 192.9 | 209.6 | 93.9 | 87.4 | 39 |
| Compound 3 | Li_{0.995}Ni_{0.909}Co_{0.068}Mg_{0.027}Al_{0.0065}O₂ | 0.7 | 1.2 | 4.1 | 7.61 | 185.2 | 203 | 95.4 | 95.4 | 37 |
| Compound 4 | Li_{0.985}Ni_{0.913}Co_{0.061}Mg_{0.037}Al_{0.0069}O₂ | 0.9 | 0.7 | 3.7 | 11.7 | 176.1 | 192.7 | 96.2 | 84.3 | 29 |
| Compound 5 | Li_{0.980}Ni_{0.905}Co_{0.061}Mg_{0.051}Al_{0.0065}O₂ | 1.3 | 0.7 | 3.7 | 10.7 | 166.7 | 184.1 | 97.4 | 82.3 | 27 |
| Compound 6 | Li_{1.003}Ni_{0.923}Co_{0.045}Mg_{0.038}Al_{0.0062}O₂ | 0.9 | 0 | 2.7 | 7.5 | 177.4 | 192.3 | 97.4 | 82.9 | 29 |
| Compound 7 | Li_{0.997}Ni_{0.952}Co_{0.029}Mg_{0.019}Al_{0.0065}O₂ | 0.5 | 0 | 1.8 | 7.9 | 190.4 | 206.5 | 87.1 | 86.1 | 24 |
| Compound 8 | Li_{1.002}Ni_{0.919}Co_{0.064}Mg_{0.014}Al_{0.0062}O₂ | 0.4 | 2.1 | 3.9 | 8.2 | 198.7 | 218.4 | 91.5 | 91.2 | 48 |
| Compound 9 | Li_{0.980}Ni_{0.909}Co_{0.066}Mg_{0.037}Al_{0.0066}O₂ | 0.9 | 2.2 | 3.9 | 10.0 | 177.6 | 192.1 | 94.2 | 84.5 | 36 |
| Compound 10 | Li_{0.987}Ni_{0.900}Co_{0.064}Mg_{0.051}Al_{0.0065}O₂ | 1.3 | 0.7 | 3.9 | 9.4 | 171.6 | 188.4 | 97.2 | 83.8 | 33 |
| Compound 11 | Li_{0.984}Ni_{0.877}Co_{0.115}Mg_{0.010}Al_{0.0066}O₂ | 0.2 | 2.2 | 6.9 | 8.8 | 191.2 | 210.2 | 94.3 | 90.8 | nm |
| Compound 12 | Li_{0.995}Ni_{0.893}Co_{0.091}Mg_{0.019}Al_{0.006}O₂ | 0.5 | 2.5 | 5.5 | 8.4 | 188.0 | 206.8 | 96.2 | 89.2 | 46 |
| Compound 13 | Li_{1.018}Ni_{0.904}Co_{0.058}Mg_{0.038}Al_{0.007}O₂ | 0.9 | 0 | 3.5 | 8.2 | 173.1 | 188.8 | 96.0 | 84.4 | 24 |
| Compound 14 | Li_{1.009}Ni_{0.906}Co_{0.067}Mg_{0.028}Al_{0.007}O₂ | 0.7 | 1.1 | 4.0 | 8.8 | 177.9 | 193.6 | 97.3 | 84.6 | 23 |
| Compound 15 | Li_{0.988}Ni_{0.896}Co_{0.083}Mg_{0.027}Al_{0.006}O₂ | 0.7 | 2.2 | 5.0 | 8.2 | 182.9 | 200.3 | 95.3 | 95.3 | 37 |
| Compound 16 | Li_{1.009}Ni_{0.880}Co_{0.097}Mg_{0.019}Al_{0.007}O₂ | 0.5 | 1.0 | 5.8 | 7.1 | 188.9 | 208.8 | 95.6 | 89.9 | 36 |
| Compound 17a | Li_{0.992}Ni_{0.874}Co_{0.116}Mg_{0.009}Al_{0.007}O₂ | 0.2 | 2.2 | 6.9 | 8.6 | 189.6 | 208.6 | 92.5 | 90.3 | 44 |
| Compound 17b | Li_{1.017}Ni_{0.901}Co_{0.080}Mg_{0.010}Al_{0.007}O₂ | 0.2 | 0 | 4.7 | 8.3 | 185.4 | 202.8 | 90.6 | 90.6 | 37 |
| Compound 18a | Li_{0.984}Ni_{0.862}Co_{0.113}Mg_{0.036}Al_{0.007}O₂ | 0.9 | 2.3 | 6.7 | 11.2 | 172.5 | 189.2 | 98.6 | 85.1 | 31 |
| Compound 18b | Li_{1.002}Ni_{0.892}Co_{0.076}Mg_{0.038}Al_{0.007}O₂ | 0.9 | 0 | 4.5 | 11.2 | 171.0 | 187.0 | 97.2 | 83.5 | 25 |
| Compound 19 | Li_{1.009}Ni_{0.896}Co_{0.083}Mg_{0.018}Al_{0.006}O₂ | 0.5 | 2.1 | 4.9 | 9.0 | 189.2 | 207.2 | 94.6 | 88.8 | 39 |
| Compound 20 | Li_{1.016}Ni_{0.901}Co_{0.068}Mg_{0.029}Al_{0.007}O₂ | 0.7 | 0 | 4.0 | 8.0 | 183.6 | 202.0 | 93.3 | 87.0 | 37 |

A comparison of Compound 6 (an example of the present invention) and Compound 14 shows that similar capacity and capacity retention performance is observed for Compound 6, but with approximately half as much cobalt. It is surprising that such good performance is achieved at such low cobalt levels. Similar comparisons can be made between Compound 6 and Compounds 18a, 18b, 19 and 20. It can be seen that the composition of Compound 6 provides remarkably good performance at a particularly low cobalt content.

## Claims

1. A particulate lithium nickel oxide material comprising particles having Formula I
LiₐNiₓCo_{y}Mg_{z}AlₚO_{2+b} Formula I
in which:
0.95 ≤ a ≤ 1.05
0.90 ≤ x < 0.95
0.040 ≤ y ≤ 0.050
0.030 ≤ z ≤ 0.045
0.0055 ≤ p ≤ 0.0075 and
-0.1 ≤ b ≤ 0.1.

2. A particulate lithium nickel oxide material according to claim 1, wherein 0.043 ≤ y ≤ 0.047.

3. A particulate lithium nickel oxide material according to claim 2, wherein 0.035 ≤ z ≤ 0.040.

4. A particulate lithium nickel oxide material according to any one of claims 1 to 3, wherein 0.0058 ≤ p ≤ 0.0065.

5. A particulate lithium nickel oxide material according to any one of claims 1 to 4, wherein 1.00 ≤ a ≤ 1.05.

6. A particulate lithium nickel oxide material according to any one of claims 1 to 5, wherein 0.91 ≤ x ≤ 0.94.

7. A particulate lithium nickel oxide material according to any one of claims 1 to 6, wherein -0.05 ≤ b ≤ 0.05.

8. A particulate lithium nickel oxide material according to any one of the preceding claims wherein
1.00 ≤ a ≤ 1.05
0.91 ≤ x ≤ 0.94
0.043 ≤ y ≤ 0.047
0.035 ≤ z ≤ 0.040
0.0058 ≤ p ≤ 0.0065; and
-0.05 ≤ b ≤ 0.05.

9. A particulate lithium nickel oxide material according to any one of the preceding claims wherein the particles comprise a core and an enriched surface layer at the surface of the core, wherein the enriched surface layer comprises a higher concentration of aluminium than the core..

10. A particulate lithium nickel oxide material according to claim 9 wherein substantially all of the Al in the particle is in the enriched surface layer.

11. A particulate lithium nickel oxide material according to claim 9 or claim 10 wherein the enriched surface layer comprises substantially no cobalt.

12. A cathode comprising the particulate lithium nickel oxide material according to any one of claims 1 to 11.

13. A lithium secondary cell or battery comprising the cathode according to claim 12.
